# EUROPEAN PATENT SPECIFICATION

(11) **EP 2 339 442 B1**
(45) Date of publication and mention of the grant of the patent: **28.06.2017**
(21) Application number: 10196163.9
(22) Date of filing: 21.12.2010
(51) Int. Cl.: G06F 3/048, G06F 3/0488

(54) **Operation direction determination apparatus, remote operating system, operation direction determination method and program**
Betriebsrichtungs-Bestimmungsvorrichtung, Fernbetriebssystem, Betriebsrichtungs-Bestimmungsverfahren und Programm
Appareil de détermination de la direction des actions, système de commande à distance, procédé de détermination de la direction des actions et programme

(30) Priority: 28.12.2009 JP 2009298945
(43) Date of publication of application: 29.06.2011
(73) Proprietor: Sony Corporation, Tokyo 108-0075 (JP)
(72) Inventor: Ito, Shin, Minato-ku Tokyo 108-0075 (JP); Ohashi, Yoshinori, Minato-ku Tokyo 108-0075 (JP)
(74) Representative: Witte, Weller & Partner Patentanwälte mbB

(56) References cited:
- EP-A1- 1 873 621
- US-A1- 2007 220 443
- US-A1- 2009 295 743

## Description

### BACKGROUND OF THE INVENTION

### Field of the Invention

The present invention relates to an operation direction determination apparatus, a remote operating system, an operation direction determining method and a program.

### Description of the Related Art

In recent years, there have been widely used portable devices such as a commander, a PDA, a cell phone and a music player having a touch panel display. In these portable devices, a user's instruction may be input on the display through a moving operation of a pointer designating an arbitrary moving start point. When the moving operation is performed, the portable device determines the direction of the moving operation and performs a processing depending on the determination result of the operation direction. Japanese Unexamined Patent Application Publication No. JP-A-Hei 5-197482 discloses related arts.

Here, the user grips the portable device with one hand and performs the moving operation with a finger of the other hand or a stylus, or performs the moving operation with a finger of the hand gripping the portable device (hereinafter, the former is referred to as two-handed operation and the latter is referred to as one-handed operation).
US 2009/0295743 A1 discloses a hand-held apparatus with a display mode based on the operating hand.
European Patent Application EP1873621 A1 describes a driving method and input method for touch panel. Here, touching an arbitrary position on a screen displayed on a touch panel sets a plurality of screen areas into which the screen is divided using lines which contain the position and which traverse the touch panel screen. Then, toughing an arbitrary position belonging to one of the screen areas performs a process operation assigned to the screen area. Further, releasing the position confirms the process operation assigned to the screen area.

Even when the user performs the moving operation with the view of the same direction, a different direction from the direction of the moving operation may be determined due to a hand shape between two-handed operation and once-handed operation. This is because a linear moving operation is easy in two-handed operation but is difficult in one-handed operation and consequently a finger's moving trajectory is easily curved. As a result, the operation direction may be erroneously determined and user-intended processing may not be accurately performed. Particularly when the moving operation is performed without conforming the display, the moving operation may be ambiguously performed in many cases, thereby leading to an erroneous determination of the operation direction.

### SUMMARY OF THE INVENTION

Embodiments of the present invention provide an operation direction determination apparatus, a remote operating system, an operation direction determination method and a program capable of suppressing erroneous determinations when an operation direction is determined during one-handed operation based on the pointer's moving start point and the moving end point.

According to a first aspect of the present invention, there is provided an operation direction determination apparatus including a touch panel for detecting a moving start point and a moving end point of a pointer moving on a display panel, the touch panel being stacked on the display panel, an operating method determination unit for, while the apparatus is being gripped with a first hand, determining whether the apparatus is being one-handedly operated with a thumb of the first hand as the pointer, the determination being based on detecting a moving trajectory of the pointer from the moving start point to the moving end point, by calculating a coordinate difference in a coordinate direction perpendicular to the moving trajectory and between a first coordinate of the moving start point and a second coordinate of the moving end point and by comparing the coordinate difference with a predetermined threshold, a determination region setting unit for, when it is determined that the apparatus is being operated with one hand, setting a determination region made of two or more regions to each of which a different moving direction is assigned by using two or more intersecting curved lines which are previously obtained by approximating moving trajectories of pointers during one-handed operation and are set with the detected moving start point as the intersection of the two or more curved lines, and an operation direction determination unit for determining a moving direction assigned to a region in the determination region in which the detected moving end point is positioned as the operation direction of the pointer.

With the configuration, a determination region is set by using curved lines which are previously obtained by approximating to a moving trajectory during one-handed operation, thereby suppressing erroneous determinations when an operation direction is determined during one-handed operation based on the pointer's moving start point and the moving and point.

The operating method determination unit may determine, while the apparatus is being gripped by the first hand, whether the apparatus is being both-handedly operated with a finger of a second hand different from the first hand or an operating tool as the pointer, the determination being based on detecting the moving trajectory of the pointer, by calculating the coordinate difference and by comparing the coordinate difference with the predetermined threshold, and when it is determined that the apparatus is being operated with both hands, the determination region setting unit may use two or more straight lines not with the detected moving start point as the intersection to set a determination region made of two or more regions to each of which a different moving direction is assigned.

The operating method determination unit may determine whether the apparatus is being operated with the right hand or with the left hand, and when it is determined that the apparatus is being operated with either the right hand or the left hand, the determination region setting unit may use two or more curve lines previously obtained by approximating to a moving trajectory of the pointer during one-handed operation with the determined hand to set the determination region.

The operation direction determination apparatus may further including an operational preference analyzing unit for analyzing a user's operational preference based on operation history information indicating a moving operation situation of the pointer; wherein when it is determined that the apparatus is being operated with one hand, the determination region setting unit may use two or more curved lines previously obtained by approximating to the moving trajectory of the pointer during one-handed operation to set the determination region in consideration of the user's operational preference.

When a distance between the moving start point and the moving end point is a predetermined threshold or more, the operation direction determination unit may determine the operation direction of the pointer.

The operation direction determination apparatus may further including a remote operation unit for remotely operating an electronic device based on the determination result of the operation direction.

According to a second aspect of the present invention, there is, provided a remote operating system having an operation direction determination apparatus and an electronic device remotely operated by the operation direction determination apparatus. The operation direction determination apparatus includes a touch panel for detecting a moving start point and a moving end point of a pointer moving on a display panel, the touch panel being stacked on the display panel, an operating method determination unit for, while the apparatus is being gripped with a first hand, determining whether the apparatus is being one-handedly operated with a thumb of the first hand as the pointer, the determination being based on detecting a moving trajectory of the pointer from the moving start point to the moving end point, by calculating a coordinate difference in a coordinate direction perpendicular to the moving trajectory and between a first coordinate of the moving start point and a second coordinate of the moving end point and by comparing the coordinate difference with a predetermined threshold; a determination region setting unit for, when it is determined, that the apparatus is being operated with one hand, setting a determination region made of two or more regime to each of which a different moving direction is assigned by doing two or more intersecting curved lines which are previously obtained by approximating n moving trajectories of pointers during one-handed operation and are set with the detected moving start point as the intersection of the two or more curved lines, on operation direction determination unit for determining a moving direction assigned to a region in the determination region in which the detected moving end point is positioned as the operation direction of the pointer, and a remote operation unit for remotely operating the electronic device based on the determination result of the operation direction.

According to a third aspect of the present invention, there is provided an operation. direction determination method, including the steps of while an apparatus is being griped with a first hand, determining Whether the apparatus is being one-handedly operated with a thumb of the first hand as a pointer, the determination being based on detecting a moving trajectory of the pointer from the moving start point to the moving end point, by calculating a coordinate difference in a coordinate direction perpendicular to the moving trajectory and between a first coordinate of the moving start point and a second coordinate of the moving end point and by comparing the coordinate difference with a predeter-mined threshold, when it is determined that the apparatus is being operated with one hand; setting a determination region made of two or more regions to each of which a different moving direction is assigned, by using two or more intersecting curved lines which are previously obtained by approximating a moving trajectories of pointers during one-handed operation and are set with the detected moving start point of the pointer as an intersection of the two or more curved lines, and determining a moving direction assigned to a region in the determination region in which the detected moving end point of the pointer is positioned as the operation direction of the pointer.

According to a fourth aspect of the present invention, there is provided a program, which, when executed by a control unit of a computer, controls the respective units of the computer to carry out the steps of the operation direction determination method. Here the program may be provided using a computer readable recording medium, or may be provided via a communication method.

In light of the foregoing, it is desirable to provide an operation direction determination apparatus, a remote operating system, an operation direction determination method and a program capable of suppressing erroneous determinations when an operation direction is determined during one-handed operation based on the pointer's moving start point and the moving end point.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:

FIG. 1 is a diagram showing an outline of an operation direction determination method according to an embodiment of the present invention;
FIG. 2 is a diagram showing a configuration of a remote operating system including a commander according to the embodiment of the present invention;
FIG. 3 is a diagram showing parameters indicating a flick operation;
FIG. 4 is a diagram showing a situation in which an operation direction is erroneously determined during one-handed operation in a past determination method;
FIG. 5 is a flow diagram showing an operation procedure of the commander;
FIG. 6A is a diagram (1/2) showing one exemplary determination situation of an operating method;
FIG. 6B is a diagram (2/2) showing one exemplary determination situation of an operating method;
FIG. 7A is a diagram (1/2) showing one exemplary setting situation of a determination region;
FIG. 7B is a diagram (2/2) showing one exemplary setting situation of a determination region;
FIG. 8 is a diagram showing a situation in which erroneous determinations of the operation direction can be suppressed during one-handed operation;
FIG. 9A is a diagram (1/3) showing a modification of the determination region set during one-handed operation;
FIG. 9B is a diagram (2/3) showing a modification of the determination region set during one-handed operation; and
FIG. 9C is a diagram (3/3) showing a modification of the determination region set during one-handed operation.

### DETAILED DESCRIPTION OF THE EMBODIMENT

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

### [1. Outline of operation direction determination method]

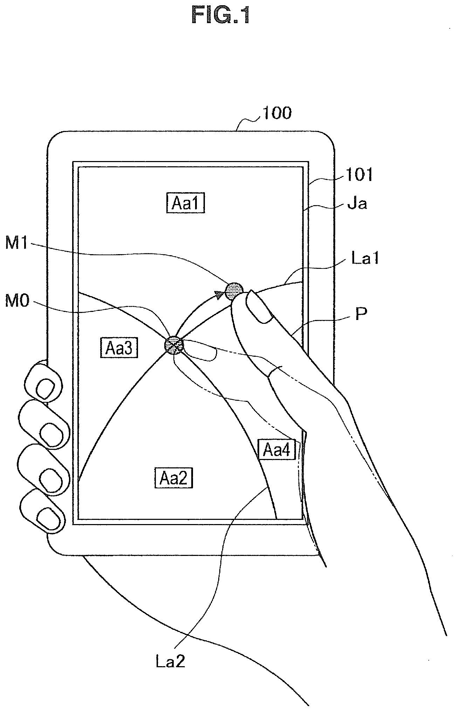

An outline of an operation direction determination method according to an embodiment of the present invention will be first described with reference to FIG. 1. Hereinafter, there will be described a case in which the determination method is applied to a commander 100 as one example of a portable device, but there can be similarly described a case in which the determination method is applied to portable devices other than the commander 100.

As shown in FIG. 1, the commander 100 is one-handedly operated with the right hand's thumb as a pointer P while being gripped with the right hand such that the base of the thumb is positioned at the lower right of the commander 100. The commander 100 has a touch panel display 101 and detects the moving start point M0 and the moving end point M1 of the pointer P moving on the display 101. The commander 101 determines that it is being operated by one hand based on the moving trajectory of the pointer P, for example.

When detecting the moving start point M0 of the pointer P, the commander 100 sets a determination region Ja made of two or more regions Aa to each of which a different moving direction is assigned on a touch panel 101b. The determination region Ja is set by using two or more curved lines La which are previously obtained by approximating to the moving trajectory of the pointer P during one-handed operation and are set with the detected moving start point M0 as the intersection. In the example shown in FIG. 1, the two curved lines La1 and La2 set with the moving start point M0 of the pointer P as the intersection are used to set the determination region Ja made of four regions Aa1 to Aa4 to which the upward, downward, left and right directions are assigned, respectively.

When detecting the moving end point M1 of the pointer P, the commander 100 determines the operation direction based on the moving direction assigned to a region in the determination region Ja in which the moving end point M1 is positioned. In the example shown in FIG. 1, the moving end point M1 is detected in the region Aa1 to which the upward direction is assigned, and the operation direction is determined to be the upward direction.

It is assumed that the user performs the moving operation with the view of the upward direction. In this case, the thumb as the pointer P moves in the upper right direction of the commander 100 in an arc with the base of the thumb as a rotation axis. Thus, the operation direction may have been erroneously determined to be the right direction in a past determination method. However, with the determination method according to an embodiment of the present invention, since the determination region Ja is set by using the curved lines La which are previously obtained by approximating to the moving trajectory of the pointer P during one-handed operation, the operation direction is appropriately determined to be the upward direction.

### [2. Configuration of commander 100]

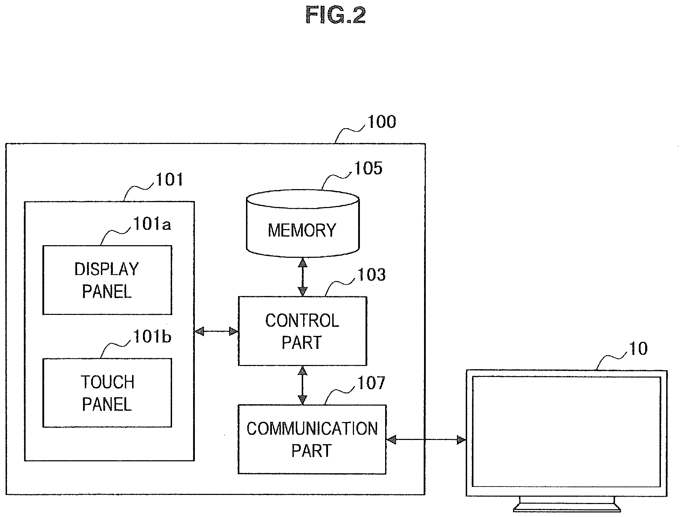

A remote operating system including the commander 100 according to an embodiment of the present invention will be described below with reference to FIG. 2.

As shown in FIG. 2, the remote operating system includes the commander 100 and a television receiver 10. The commander 100 is an exemplary portable device such as a commander, a PDA, a cell phone and a music player. The television receiver 10 is an exemplary electronic device remotely operated by the user using the commander 100.

The commander 100 transmits an operation command to the television receiver 10 via wired or wireless communicating means in order to remotely operate the television receiver 10. The commander 100 may transmit the operation command via a network.

The commander 100 includes the touch panel display 101, a control unit 103, a memory 105 and a communication unit 107.

The touch panel display 101 is configured such that the touch panel 101b is stacked on the display panel 101a. The touch panel 101b employs a panel of resistive film type, electrostatic capacity type, ultrasonic type or infrared type. The display panel 101a employs a liquid crystal display (LDC) or the like.

The touch panel 101b functions as an operation detection unit for detecting a contact state of the pointer P such as a finger or a stylus on the panel. The touch panel 101b supplies a contact signal/release signal to the control unit 103 depending on a change in contact/non-contact state of the pointer P on the panel. The touch panel 101b supplies an X/Y coordinate signal corresponding to the contact position to the control unit 103 while the pointer P is contacting on the panel.

The control unit 103 includes a CPU, a RAM, a ROM and the like, and the CPU uses the RAM as working memory to execute programs stored in the ROM, thereby controlling the respective units of the commander 100. The control unit 103 functions as an operating method determination unit, a determination region setting unit, an operation direction determination unit, an operation preference analyzing unit and a remote operation unit by executing the programs.

The memory 105 is a nonvolatile memory such as an EEPROM, and stores therein information such as setting data of determination regions Ja and Jb, operation history information indicating the moving operation situation of the pointer, display data and operation command information. The communication unit 107 transmits a predetermined operation command to the television receiver 10 in response to user's operation input.

The control unit 103 decodes the coordinate signal supplied from the touch panel 101b to generate coordinate data, and controls each unit in the commander 100 based on the coordinate data and the contact/release signal. The control unit 103 reads the command information corresponding to the operation input from the memory 105 in response to user's operation input, and causes the communication unit 107 to transmit a predetermined operation command to the television receiver 10. The control unit 103 reads the display data stored in the memory 105, generates and supplies display data to the display panel 101a, and displays an image corresponding to the display data on the display panel 101a.

The control unit 103 determines whether the commander 100 is being operated with one hand, and when determining that the commander is being operated with one hand, sets the determination region Ja named of two or more regions Aa to each of which a different moving direction is assigned on the touch panel 101b. The determination region Ja is set by using the two or more curved lines La which are previously obtained by approximating to the moving trajectory of the pointer P during one-handed operation and are set with the detected moving start point M0 as the intersection. Then, the control unit 103 determines the moving direction assigned to the region Aa in which the moving end point M1 of the pointer P is positioned as the operation direction.

### [3. Operation direction determination method]

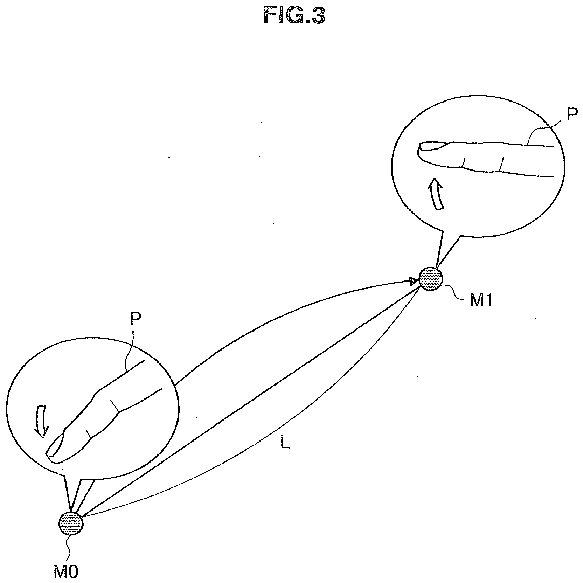

The operation direction determination method will be described below with reference to FIGS. 3 to 9. First, a flick operation will be described with reference to FIG. 3.

FIG. 3 shows parameters indicating the flick operation. As shown in FIG. 3, the flick operation is indicated by the parameters including a moving start point M0, a moving end point M1 and a moving distance L.

The flick operation is an operation of moving the pointer P contacting on the panel in an arbitrary direction on the panel. For the flick operation, a contact point indicating a transition from a non-contact state to a contact state is the moving start point M0, a contact point indicating a transition from a contact state to a non-contact state is the moving end point M1, and a linear distance between the moving start point M0 and the moving end point M1 is the moving distance L.

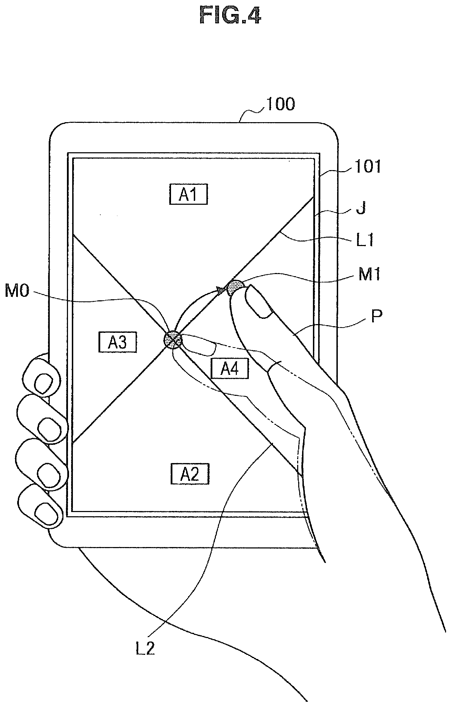

There will be described below a situation in which the operation direction is erroneously determined during one-handed operation with the past determination method with reference to FIG. 4. As shown in FIG. 4, the commander 100 is being one-handedly operated with the right hand's thumb as the pointer P while being gripped with the right hand such that the root of the thumb is positioned at the lower right of the commander 100.

When detecting the moving start point M0 of the pointer P, the commander 100 uses two straight lines L1 and L2 which are perpendicular to each other with the moving start point M0 as the intersection to set a determination region J made of four regions A1 to A4 to which the upward, downward, left and right directions are assigned, respectively, on the touch panel 101b.

It is assumed that the user performs the moving operation with the view of the upward direction. In this case, the thumb as the pointer P moves in the upper right direction of the commander 100 in an arc with its root as a rotation axis.

When detecting the moving end point M1 of the pointer P, the commander 100 determines the operation direction based on the moving direction assigned to the region A in the determination region J1 in which the moving end point M1 is positioned. The moving end point M1 is detected in the region A4 assigned with the right direction and thus the operation direction is erroneously determined to be the right direction.

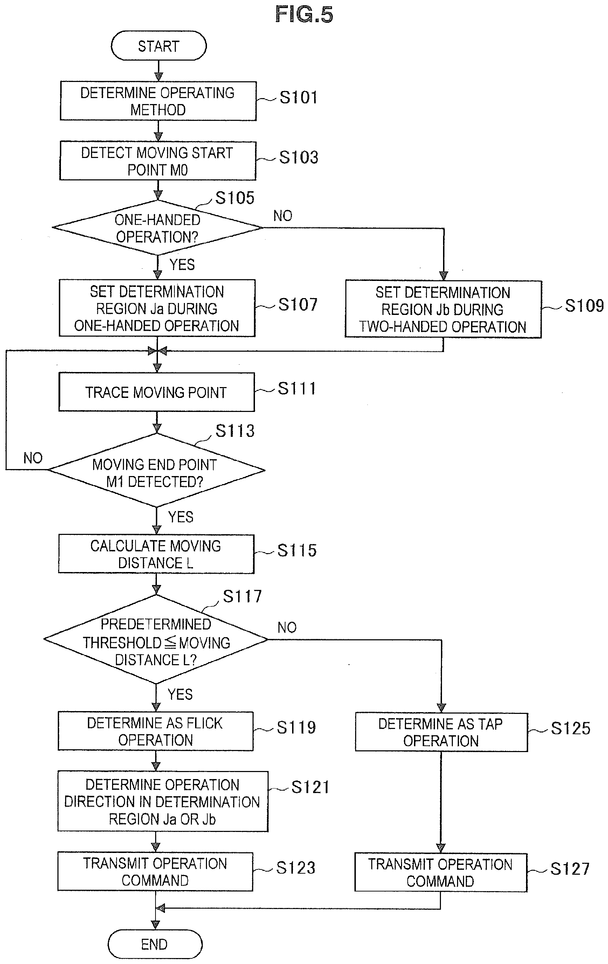

The operation direction determination method according to an embodiment of the present invention will be described below with reference to FIGS. 5 to 7. The FIGS. 5, 6A and 6B, and 7A and 7B show an operation procedure of the commander 100, an exemplary determination situation of the operating method, and an exemplary setting situation of the determination regions Ja and Jb, respectively.

As shown in FIG. 5, the commander 100 first determines its operating method, that is, which of one-handed operation and two-handed operation is being performed (step S101).

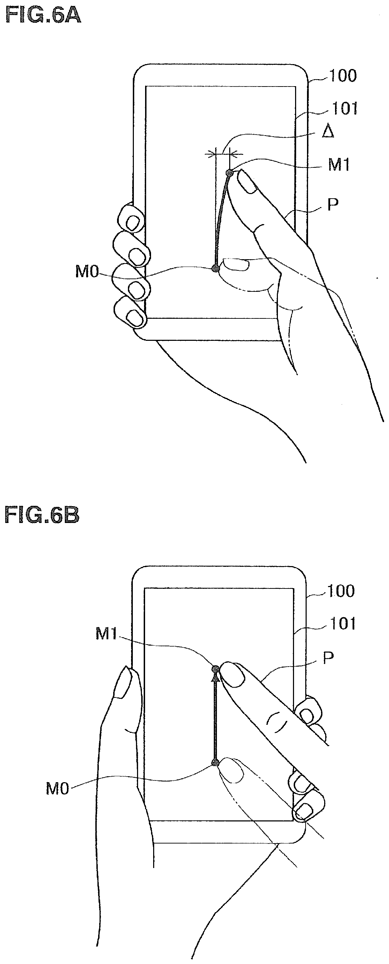

As shown in FIGS. 6A and 6B, the commander 100 determines its operating method based on the moving trajectory of the pointer P, for example. FIGS. 6A and 6B show the moving trajectory of the pointer P during one-handed operation and during two-handed operation, respectively.

In the example shown in FIG. 6A, the commander 100 is being one-handedly operated with the right hand's thumb as the pointer P while being gripped with the right hand such that the base of the thumb is positioned at the lower right of the commander 100. Then, when the user performs the moving operation with the view of the upward direction, for example, the thumb as the pointer P moves in the upper right direction of the commander 100 in an arc with its root as a rotation axis.

On the other hand, in the example shown in FIG. 6B, the commander 100 is being both-handedly operated with the right hand's index finger (or stylus) as the pointer P while being gripped with the left hand. Then, when the user performs the moving operation with the view of the upward direction, for example, the index finger (or stylus) as the pointer P linearly moves in the upward direction of the commander 100.

Thus, when the moving operation is performed in the upward direction, for example, a certain coordinate difference Δ occurs in the horizontal direction between the moving start point M0and the moving end point M1 during one-handed operation but little coordinate difference Δ occurs during two-handed operation.

Therefore, the commander 100 designates an arbitrary moving direction to cause the user to perform the moving operation, and compares the coordinate difference Δ between the moving start point M0 and the moving end point M1 with a predetermined threshold, thereby determining its operating method.

The commander 100 may determine whether it is being operated with the right hand or with the left hand during one-handed operation based on a positional relationship between the moving start point M0 and the moving end point M1. In other words, when the moving operation is performed in the upward direction, for example, the commander 100 determines that it is being operated with the right hand when the moving end point M1 is positioned to the right of the moving start point M0, and that it is being operated with the left hand when the moving end point M1 is positioned to the left of the moving start point M0.

When determining the operating method, the commander 100 starts operation direction determination processing. The commander 100 detects the moving start point M0 of the pointer P (S103). When detecting the moving start point M0, the commander 100 sets the determination region Ja or Jb corresponding to the determination result of the operation direction on the touch panel 101b.

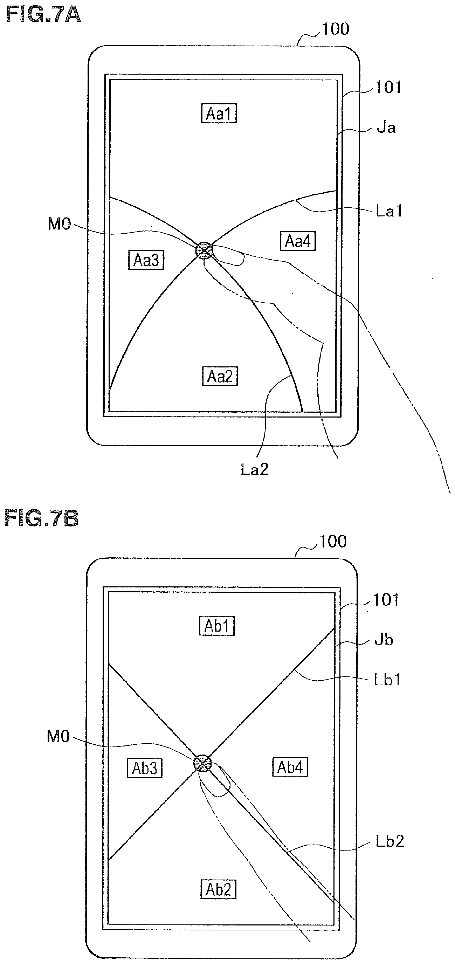

As shown in FIGS. 7A and 7B, the commander 100 sets the determination region Ja or Jb made of four regions Aa1 to Aa4 or Ab1 to Ab4 to which the upward, downward, left and right directions are assigned, respectively, depending on the determination result of the operation direction (S107, S109). The determination region Ja or Jb may be set at other timing before the operation direction determination processing (S121).

The determination region Ja is set by using two or more curved lines La1 and La2 which are previously obtained by approximating to the moving trajectory of the pointer P during one-handed operation and are set with the detected moving start point M0 as the intersection (S107).

The determination region Ja is set by using the two curved lines La1 and La2 indicating arcs with the moving start point M0 as the intersection, for example. The determination region Ja may be set by using curved lines capable of approximating the finger's moving trajectory during one-handed operation such as two curved lines of y = x^{0.5} and y = (-x + 1)^{0.5}. The determination region Ja may be set to have four regions indicated by three or four curved lines.

On the other hand, as shown in FIG. 7B, the determination region Jb may be set by using the two straight lines Lb1 and Lb2 which are set based on the moving trajectory of the pointer P during two-handed operation with the moving start point M0 of the pointer P as the intersection (S109).

The determination region Jb is set by using the two straight lines Lb1 and Lb2 which are perpendicular to each other with the moving start point M0 as the intersection and have a tilt of ±45° relative to the display 101. The determination region Jb may be set by using two straight lines which are not perpendicular to each other but cross. The determination region Jb may be set by using the two straight lines having a tilt other than ±45° relative to the display 101. The determination region Jb may be set to have four regions indicated by three or four straight lines.

When setting the determination region Ja or Jb, the commander 100 traces the moving of the pointer P and detects the moving end point M1 (S111, S113). When detecting the moving end point M1, the commander 100 calculates the moving distance L between the moving start point M0 and the moving end point M1 (S115). Then, the commander 100 determines whether the moving distance L is a predetermined threshold or more (S117).

When the moving distance L is the threshold or more, the commander 100 determines that the moving operation is the flick operation (S119), and uses the determination region Ja or Jb to determine the operation direction. The commander 100 determines the moving direction assigned to the region Aa or Ab in the determination region Ja or Jb in which the moving end point M1 is positioned as the operation direction (S121). The commander 100 transmits an operation command corresponding to the operation direction to the television receiver 10 (S123).

On the other hand, when the moving distance L is less than the threshold, the commander 100 determines that the moving operation is a tap operation (S125) and ends the operation direction determination processing. Then, the commander 100 transmits an operation command corresponding to the tap operation to the television receiver 10 (S127).

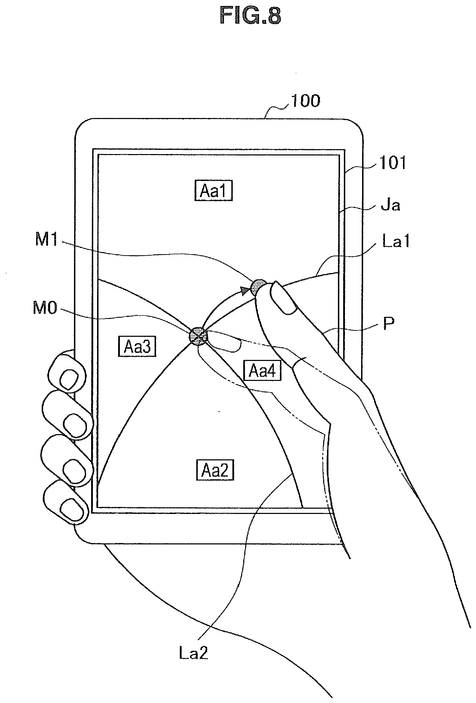

FIG. 8 shows a situation in which an erroneous determination of the operation direction is suppressed during one-handed operation. As shown in FIG. 8, the commander 100 is being one-handedly operated with the right hand's thumb as the pointer P while being gripped with the right hand such that the base of the thumb is positioned at the lower right of the commander.

When detecting the moving start point M0 of the pointer P, the commander 100 uses the two curved lines La1 and La2 which are perpendicular to each other with the moving start point M0 as the intersection to set the determination region Ja made of the four regions Aa1 to Aa4 to which the upward, downward, left and right directions are assigned, respectively, on the touch panel 101b.

It is assumed that the user performs the moving operation with the view of the upward direction. In this case, the thumb as the pointer P moves in the upper right direction of the commander 100 in an arc with its root as a rotation axis.

When detecting the moving end point M1 of the pointer P, the commander 100 determines that the moving direction assigned to the region in the determination region Ja in which the moving end point M1 is positioned is the operation direction. Since the determination region Ja is set by using the curved lines La1 and La2 previously obtained by approximating to the moving trajectory of the pointer P during one-handed operation, the moving end point M1 is detected in the region Aa1 assigned with the upward direction, and the operation direction is accurately determined to be the upward direction.

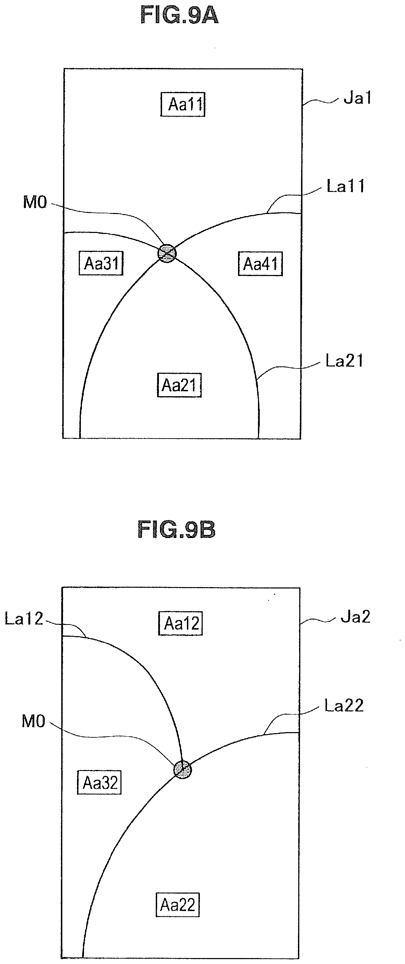

FIGS. 9A to 9C show the determination regions Ja1 to Ja3 as a modification of the determination region Ja set during one-handed operation, respectively.

The determination region Ja1 shown in FIG. 9A is set as the determination region made of four regions Aa11 to Aa41 by using two curved lines La11 and La21 indicating arcs having a different radius with the moving start point M0 as the intersection. The determination region Ja1 is set to properly approximate the finger's moving trajectory during one-handed operation.

The determination region Ja1 may be set by previously adjusting the radii of the two or more curved lines La11 and La21 and the intersection position depending on whether one-handed operation is performed with the left hand or with the right hand. The determination region Ja1 may be set by accumulating operation history information indicating the moving operation situation by the commander 100 to analyze user's operation preference, and previously adjusting the two or more curved lines La1 and La21 for the operation preference.

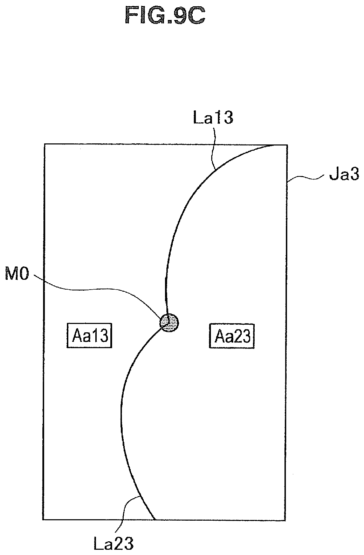

The determination region Ja2 shown in FIG. 9B is set as the determination region made of regions Aa12 to Aa32 to each of which a different direction is assigned, by using the two curved lines La12 and La22 crossing at the moving start point M0. For example, in the determination region Ja2, the upward, right and left directions are assigned to the regions Aa12, Aa22 and Aa32, respectively. The determination region Ja3 shown in FIG. 9C is set as the determination region made of the regions Aa13 and Aa23 to each of which a different direction is assigned, by using the two curved lines La13 and La23 crossing at the moving start point M0. For example, the left and right directions are assigned to the regions Aa13 and Aa23 in the determination region Ja3, respectively. The determination region Ja may be set to be made of five or more regions depending on the number of operation directions to be determined.

### [4. Conclusion]

As described above, with the operation direction determination method according to an embodiment of the present invention, the determination region Ja is set by using the curved lines La previously obtained by approximating to the moving trajectory during one-handed operation, thereby reducing erroneous determinations when determining the operation direction during one-handed operation based on the moving start point M0 and the moving end point M1 of the pointer P.

It should be understood by those skilled in the art that various modifications, combinations, sub-combinations and alterations may occur depending on design requirements and other factors insofar as they are within the scope of the appended claims or the equivalents thereof.

For example, the case has been described above in which the operation direction determination method according to an embodiment of the present invention is applied to the flick operation. However, the operation direction determination method according to an embodiment of the present invention can be applied to swipe and hold operation. The swipe and hold operation is an operation of contacting the panel with a pointer and moving (swiping) the contacted pointer on the panel and then holding it.

For the swipe and hold operation, a contact point indicating the start of the moving in the contact state is the moving start point M0 and a contact point indicating the end of the moving in the contact state is the moving end point M1. The start and end of the moving in the contact state are determined based on a magnitude of positional change in the contact points for a predetermined time.

The case has been described above in which a determination is made as to whether the commander 100 is being operated with one hand or with both hands, and in the case of one-handed operation, whether the commander 100 is being operated with the right hand or with the left hand. However, an acceleration sensor or the like may be used to determine the direction of the commander 100 during operation, that is, whether the commander 100 is being operated horizontally or longitudinally. Then, the setting of the determination regions Ja and Jb are changed depending on the direction of the commander 100, thereby further suppressing erroneous determinations when determining the operation direction during one-handed operation.

The case has been described above in which the commander 100 transmits a command corresponding to the determination result based on the determination result of the operation direction. However, the commander 100 may be configured to perform internal processing other than the command transmission processing based on the determination result.

The present application contains subject matter related to that disclosed in Japanese Priority Patent Application JP 2009-298945 filed in the Japan Patent Office on December 28, 2009.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An operation direction determination apparatus (100) comprising:
a touch panel (101 b) for detecting a moving start point and a moving end point of a pointer moving on a display panel (101 a), the touch panel being stacked on the display panel (101 a);
an operating method determination unit (103) for, while the apparatus is being gripped with a first hand, determination whether the apparatus is being one-handedly operated with a thumb of the first hand as the pointer, the determination being based on detecting a moving trajectory of the pointer from the moving start point to the moving end point, by calculating a coordinate difference in a coordinate direction perpendicular to the moving trajectory and between a first coordinate of the moving start point and a second coordinate of the moving end point and by comparing the coordinate difference with a predetermined threshold;
**characterized by**
a determination region setting unit (103) for, when it is determined that the apparatus is being operated with one hand, setting a determination region made of two or more regions to each of which a different moving direction is assigned by using two or more intersecting curved lines which are previously obtained by approximating moving trajectories of pointers during one-handed operation and are set with the detected moving start point as the intersection of the two or more curved lines; and
an operation direction determination unit (103) for determining a moving direction assigned to a region in the determination region in which the detected moving end point is positioned as the operation direction of the pointer.

2. The operation direction determination apparatus (100) according to claim 1,
wherein the operating method determination unit determines, while the apparatus (100) is being gripped by the first hand, whether the apparatus is being both-handedly operated with a finger of a second hand different from the first hand or an operating tool as the pointer, the determination being based on detecting the moving trajectory of the pointer, by calculating the coordinate difference and by comparing the coordinate difference with the predetermined threshold, and
when it is determined that the apparatus (100) is being operated with both hands, the determination region setting unit uses two or more straight lines set with the detected moving start point as the intersection to set a determination region made of two or more regions to each of which a different moving direction is assigned.

3. The operation direction determination apparatus (100) according to claim 1,
wherein the operating method determination unit (103) determines whether the apparatus is being operated with the right hand or with the left hand, and
when it is determined that the apparatus (100) is being operated with either the right hand or the left hand, the determination region setting unit uses two or more curved lines previously obtained by approximating to a moving trajectory of the pointer during one-handed operation with the determined hand to set the determination region.

4. The operation direction determination apparatus (100) according to claim 1, further comprising
an operation preference analyzing unit for analyzing a user's operation preference based on operation history information indicating a moving operation situation of the pointer,
wherein when it is determined that the apparatus (100) is being operated with one hand, the determination region setting unit uses two or more curved lines previously obtained by approximating to the moving trajectory of the pointer during one-handed operation to set the determination region in consideration of the user's operation preference.

5. The operation direction determination apparatus (100) according to claim 1,
wherein when a distance between the moving start point and the moving end point is a predetermined threshold or more, the operation direction determination unit determines the operation direction of the pointer.

6. The operation direction determination apparatus (100) according to claim 1, further comprising
a remote operation unit for remotely operating an electronic device based on the determination result of the operation direction.

7. The operation direction determination apparatus (100) according to claim 1, wherein the determination whether the apparatus (100) is being one-handedly operated is further based on detecting that the coordinate difference is more than the predetermined threshold.

8. The operation direction determination apparatus (100) according to claim 1, wherein the determination whether the apparatus (100) is being both-handedly operated is further based on detecting that the coordinate difference is less than the predetermined threshold.

9. A system having an operation direction determination apparatus (100) according to claim 1 and an electronic device remotely operated by the operation direction determination apparatus,
wherein the operation direction determination apparatus (100) further comprises:
a remote operation unit for remotely operating the electronic device based on a determination result of the operation direction.

10. An operation direction determination method, comprising the steps of:
while an apparatus is being gripped with a first hand, determining whether the apparatus is being one-handedly operated with a thumb of the first hand as a pointer, the determination being based on detecting a moving trajectory of the pointer from the moving start point to the moving end point, by calculating a coordinate difference in a coordinate direction perpendicular to the moving trajectory and between a first coordinate of the moving start point and a second coordinate of the moving end point and by comparing the coordinate difference with a predetermined threshold;
**characterized in that**
when it is determined that the apparatus is being operated with one hand, setting a determination region made of two or more regions to each of which a different moving direction is assigned, by using two or more intersecting curved lines which are previously obtained by approximating moving trajectories of pointers during one-handed operation and are set with the detected moving start point of the pointer as an intersection of the two or more curved lines; and
determining a moving direction assigned to a region in the determination region in which the detected moving end point of the pointer is positioned as the operation direction of the pointer.

11. A program, which, when executed by a control unit of a computer, controls the respective units of the computer to carry out the steps of the method according to claim 10.

## Patentansprüche

1. Betätigungsrichtungsbestimmungsvorrichtung (100) mit:
einem Berührpanel (101b) zum Detektieren eines Bewegungsstartpunktes und eines Bewegungsendpunktes eines Zeigers, der sich auf einem Anzeigepanel (101a) bewegt, wobei das Berührpanel auf dem Anzeigepanel (101a) angeordnet ist;
einer Betätigungsartbestimmungseinheit (103) zum Bestimmen, während die Vorrichtung mit einer ersten Hand gegriffen wird, ob die Vorrichtung mit einem Daumen der ersten Hand als der Zeiger einhändig betätigt wird, wobei die Bestimmung auf einem Detektieren einer Bewegungstrajektorie des Zeigers von dem Bewegungsstartpunkt zu dem Bewegungsendpunkt basiert, durch Berechnen einer Koordinatendifferenz in einer Koordinatenrichtung senkrecht zu der Bewegungstrajektorie und zwischen einer ersten Koordinate des Bewegungsstartpunktes und einer zweiten Koordinate des Bewegungsendpunktes und durch Vergleichen der Koordinatendifferenz mit einem vorbestimmten Schwellwert;
**gekennzeichnet durch**
eine Bestimmungsbereichseinstelleinheit (103) zum Einstellen, wenn bestimmt wird, dass die Vorrichtung mit einer Hand betätigt wird, eines Bestimmungsbereiches, der aus zwei oder mehr Bereichen gebildet wird, denen jeweils eine unterschiedliche Bewegungsrichtung zugeordnet ist, durch Verwendung zweier oder mehrerer sich schneidender gekrümmter Linien, die zuvor durch Annäherung von Bewegungstrajektorien von Zeigern während einhändiger Betätigung erhalten worden sind, und die mit dem detektierten Bewegungsstartpunkt als der Schnittpunkt von zwei oder mehr gekrümmten Linien eingestellt werden; und
einer Betätigungsrichtungsbestimmungseinheit (103) zum Bestimmen einer Bewegungsrichtung, die einem Bereich in dem Bestimmungsbereich zugeordnet ist, in dem der detektierte Bewegungsendpunkt positioniert ist, als die Betätigungsrichtung des Zeigers.

2. Betätigungsrichtungsbestimmungsvorrichtung (100) nach Anspruch 1,
wobei die Betätigungsartbestimmungseinheit bestimmt, während die Vorrichtung (100) mit der ersten Hand gegriffen wird, ob die Vorrichtung beidhändig mit einem Finger einer zweiten Hand, die von der ersten Hand verschieden ist, oder einem Betätigungswerkzeug als der Zeiger betätigt wird, wobei die Bestimmung auf einem Detektieren der Bewegungstrajektorie des Zeigers beruht, durch Berechnen der Koordinatendifferenz und durch Vergleichen der Koordinatendifferenz mit dem vorbestimmten Schwellwert, und
wenn bestimmt wird, dass die Vorrichtung (100) mit beiden Händen betätigt wird, verwendet die Bestimmungsbereichseinstelleinheit zwei oder mehr gerade Linien, die mit dem Bewegungsstartpunkt als der Schnittpunkt eingestellt sind, um einen Bestimmungsbereich einzustellen, der aus zwei oder mehr Bereichen gebildet ist, denen jeweils eine unterschiedliche Bewegungsrichtung zugeordnet ist.

3. Betätigungsrichtungsbestimmungsvorrichtung (100) nach Anspruch 1,
wobei die Betätigungsartbestimmungseinheit (103) bestimmt, ob die Vorrichtung mit der rechten Hand oder mit der linken Hand betätigt wird, und
wenn bestimmt wird, dass die Vorrichtung (100) gerade entweder mit der rechten Hand oder der linken Hand betätigt wird, verwendet die Bestimmungsbereichseinstelleinheit zwei oder mehr gekrümmte Linien, die zuvor durch Annähern an eine Bewegungstrajektorie des Zeigers während einhändiger Betätigung mit der bestimmten Hand erhalten wurden, um den Bestimmungsbereich einzustellen.

4. Betätigungsrichtungsbestimmungsvorrichtung (100) nach Anspruch 1, weiterhin mit
einer Betätigungspräferenzanalysiereinheit zum Analysieren einer Betätigungspräferenz des Benutzers basierend auf Betätigungsvergangenheitsinformation, die eine Bewegungsbetätigungssituation des Zeigers angibt,
wobei, wenn bestimmt wird, dass die Vorrichtung (100) mit einer Hand betätigt wird, die Bestimmungsbereichseinstelleinheit zwei oder mehr gekrümmte Linien verwendet, die zuvor durch Annäherung an die Bewegungstrajektorie des Zeigers während einhändigem Betrieb erhalten wurden, um den Bestimmungsbereich unter Berücksichtigung der Betätigungspräferenz des Benutzers einzustellen.

5. Betätigungsrichtungsbestimmungsvorrichtung (100) nach Anspruch 1,
wobei, wenn ein Abstand zwischen dem Bewegungsstartpunkt und dem Bewegungsendpunkt ein vorbestimmter Schwellwert oder größer ist, die Betätigungsrichtungsbestimmungseinheit die Betätigungsrichtung des Zeigers bestimmt.

6. Betätigungsrichtungsbestimmungsvorrichtung (100) nach Anspruch 1, weiterhin mit
einer Fembetätigungseinheit zum Fernbetätigen eines elektronischen Gerätes basierend auf dem Bestimmungsergebnis der Betätigungsrichtung.

7. Betätigungsrichtungsbestimmungsvorrichtung (100) nach Anspruch 1, wobei die Bestimmung, ob die Vorrichtung (100) einhändig betätigt wird, weiterhin auf einem Detektieren basiert, dass die Koordinatendifferenz größer ist als der vorbestimmte Schwellwert.

8. Betätigungsrichtungsbestimmungsvorrichtung (100) nach Anspruch 1, wobei die Bestimmung, ob die Vorrichtung (100) beidhändig betätigt wird, weiterhin auf einem Detektieren basiert, dass die Koordinatendifferenz geringer ist als der vorbestimmte Schwellwert.

9. System mit einer Betätigungsrichtungsbestimmungsvorrichtung (100) nach Anspruch 1, und einem elektronischen Gerät, das durch die Betätigungsrichtungsbestimmungsvorrichtung fembetätigt wird,
wobei die Betätigungsrichtungsbestimmungsvorrichtung (100) weiterhin aufweist:
eine Fernbetätigungseinheit zum Fernbetätigen des elektronischen Gerätes basierend auf einem Bestimmungsergebnis der Betätigungsrichtung.

10. Betätigungsrichtungsbestimmungsverfahren, mit den Schritten:
während eine Vorrichtung mit einer ersten Hand gegriffen wird, Bestimmen, ob die Vorrichtung einhändig mit einem Daumen der ersten Hand als Zeiger betätigt wird, wobei die Bestimmung auf einem Detektieren einer Bewegungstrajektorie des Zeigers von dem Bewegungsstartpunkt zu dem Bewegungsendpunkt basiert, durch Berechnen einer Koordinatendifferenz in einer Koordinatenrichtung senkrecht zu der Bewegungstrajektorie und zwischen einer ersten Koordinate des Bewegungsstartpunktes und einer zweiten Koordinate des Bewegungsendpunktes, und durch Vergleichen der Koordinatendifferenz mit einem vorbestimmten Schwellwert;
**dadurch gekennzeichnet, dass**,
wenn bestimmt wird, dass die Vorrichtung mit einer Hand betätigt wird, Einstellen eines Bestimmungsbereiches, der aus zwei oder mehr Bereichen gebildet ist, denen jeweils eine unterschiedliche Bewegungsrichtung zugeordnet ist, durch Verwenden zweier oder mehrerer sich schneidender gekrümmter Linien, die zuvor durch Annäherung von Bewegungstrajektorien von Zeigern während einhändiger Betätigung erhalten wurden und mit dem detektierten Bewegungsstartpunkt des Zeigers als ein Schnittpunkt der zwei oder mehr gekrümmten Linien eingestellt sind; und
Bestimmen einer Bewegungsrichtung, die einem Bereich in dem Bestimmungsbereich zugeordnet ist, in dem der detektierte Bewegungsendpunkt des Zeigers positioniert ist, als die Betätigungsrichtung des Zeigers.

11. Programm, das, wenn es auf einer Steuereinheit eines Computers ausgeführt wird, die jeweiligen Einheiten des Computers steuert, um die Schritte des Verfahrens gemäß Anspruch 10 auszuführen.

## Revendications

1. Appareil de détermination de direction de maniement (100) comprenant :
un écran tactile (101b) pour détecter un point de départ de déplacement et un point d'arrivée de déplacement d'un pointeur qui se déplace sur un écran de visualisation (101a), l'écran tactile étant empilé sur l'écran de visualisation (101a) ;
une unité de détermination de procédé de fonctionnement (103) pour réaliser, alors que l'appareil est saisi avec une première main, une détermination indiquant si l'appareil est manié d'une seule main avec le pouce de la première main utilisé comme pointeur, la détermination étant basée sur la détection d'une trajectoire de déplacement du pointeur depuis le point de départ du déplacement jusqu'au point d'arrivée du déplacement, en calculant une différence de coordonnées dans une direction de coordonnées perpendiculaire à la trajectoire de déplacement et entre une première coordonnée du point de départ du déplacement et une seconde coordonnée du point d'arrivée du déplacement et en comparant la différence de coordonnées avec un seuil prédéterminé ;
**caractérisé par**
une unité de définition de région de détermination (103) pour définir, lorsqu'il est déterminé que l'appareil est manié avec une seule main, une région de détermination composée d'au moins deux régions à chacune des quelles une autre direction de déplacement est attribuée en utilisant au moins deux lignes courbes d'intersection qui sont obtenues auparavant en se rapprochant de trajectoires de déplacement de pointeurs pendant un maniement à une seule main et sont définies avec le point de départ de déplacement détecté utilisé comme intersection des deux, ou plus, lignes arrondies ; et
une unité de détermination de direction de maniement (103) pour déterminer une direction de déplacement attribuée à une région dans la région de détermination dans laquelle le point d'arrivée de déplacement détecté est positionné en tant que direction de maniement du pointeur.

2. Appareil de détermination de direction de maniement (100) selon la revendication 1,
dans lequel l'unité de détermination de procédé de fonctionnement détermine, alors que l'appareil (100) est saisi par la première main, si l'appareil est manié des deux mains avec un doigt d'une seconde main différent de la première main ou un outil de fonctionnement utilisé comme pointeur, la détermination étant basée sur la détection de la trajectoire de déplacement du pointeur, en calculant la différence de coordonnées et en comparant la différence de coordonnées avec le seuil prédéterminé et
lorsqu'il est déterminé que l'appareil (100) est manié avec les deux mains, l'unité de définition de région de détermination utilise au moins deux lignes droites définies avec le point de départ de déplacement utilisé comme intersection pour définir une région de détermination composée d'au moins deux régions auxquelles une autre direction de déplacement est attribuée.

3. Appareil de détermination de direction de maniement (100) selon la revendication 1,
dans lequel l'unité de détermination de procédé de fonctionnement (103) détermine si l'appareil est manié avec la main droite ou avec la main gauche et
lorsqu'il est déterminé que l'appareil (100) est manié soit avec la main droite, soit avec la main gauche, l'unité de définition de région de détermination utilise au moins deux lignes courbes obtenues auparavant en se rapprochant d'une trajectoire de déplacement du pointeur pendant un maniement à une seule main avec la main déterminée pour définir la région de détermination.

4. Appareil de détermination de direction de maniement (100) selon la revendication 1, comprenant en outre :
une unité d'analyse de préférence de maniement pour analyser une préférence de maniement de l'utilisateur en se basant sur des informations d'historique de maniement indiquant une situation de maniement de déplacement du pointeur,
dans lequel, lorsqu'il est déterminé que l'appareil (100) est manié avec une seule main, l'unité de définition de région de détermination utilise au moins deux lignes courbes obtenues auparavant en se rapprochant de la trajectoire de déplacement du pointeur pendant un maniement à une seule main pour définir la région de détermination en prenant en considération la préférence de maniement de l'utilisateur.

5. Appareil de détermination de direction de maniement (100) selon la revendication 1,
dans lequel lorsqu'une distance entre le point de départ du déplacement et le point d'arrivée du déplacement est un seuil prédéterminé, ou plus, l'unité de détermination de direction de maniement détermine la direction de maniement du pointeur.

6. Appareil de détermination de direction de maniement (100) selon la revendication 1, comprenant en outre
une unité de commande à distance pour faire fonctionner à distance un dispositif électronique en se basant sur le résultat de détermination de la direction de maniement.

7. Appareil de détermination de direction de maniement (100) selon la revendication 1, dans lequel la détermination indiquant si l'appareil (100) est manié d'une seule main, est en outre basée sur le fait de détecter que la différence de coordonnées est supérieure au seuil prédéterminé.

8. Appareil de détermination de direction de maniement (100) selon la revendication 1, dans lequel la détermination indiquant si l'appareil (100) est manié des deux mains, est en outre basée sur le fait de détecter que la différence de coordonnées est inférieure au seuil prédéterminé.

9. Système ayant un appareil de détermination de direction de maniement (100) selon la revendication 1 et un dispositif électronique manié à distance par l'appareil de détermination de direction de maniement,
dans lequel l'appareil de détermination de direction de maniement (100) comprend en outre :
une unité de commande à distance pour faire fonctionner à distance le dispositif électronique en se basant sur un résultat de détermination de la direction de maniement.

10. Procédé de détermination de direction de maniement, comprenant les étapes consistant :
alors qu'un appareil est saisi avec une première main, à déterminer si l'appareil est manié d'une seule main avec le pouce de la première main utilisé comme pointeur, la détermination étant basée sur la détection d'une trajectoire de déplacement du pointeur depuis le point de départ du déplacement jusqu'au point d'arrivée du déplacement, en calculant une différence de coordonnées dans une direction de coordonnées perpendiculaire à la trajectoire de déplacement et entre une première coordonnée du point de départ du déplacement et une seconde coordonnée du point d'arrivée du déplacement et en comparant la différence de coordonnées avec un seuil prédéterminé ;
**caractérisé en ce qu'**il consiste :
lorsqu'il est déterminé que l'appareil est manié avec une seule main, à définir une région de détermination composée d'au moins deux régions à chacune des quelles une autre direction de déplacement est attribuée en utilisant au moins deux lignes courbes d'intersection qui sont obtenues auparavant en se rapprochant de trajectoires de déplacement de pointeurs pendant un maniement à une seule main et sont définies avec le point de départ de déplacement détecté du pointeur utilisé comme intersection des deux, ou plus, lignes arrondies ; et
à déterminer une direction de déplacement attribuée à une région dans la région de détermination dans laquelle le point d'arrivée de déplacement détecté du pointeur est positionné en tant que direction de maniement du pointeur.

11. Programme qui, lorsqu'il est exécuté par une unité de commande d'un ordinateur, commande les unités respectives de l'ordinateur pour réaliser les étapes du procédé selon la revendication 10.
